# EUROPÄISCHE PATENTSCHRIFT

(11) **EP 0 396 026 B1**
(45) Veröffentlichungstag und Bekanntmachung des Hinweises auf die Patenterteilung: **29.06.1994**
(21) Anmeldenummer: 90107979.8
(22) Anmeldetag: 26.04.1990
(51) Int. Cl.: C04B 37/02

(54) **Ringspurlager**
Collar thrust bearing
Crapaudine annulaire

(30) Priorität: 29.04.1989 DE 3914332
(43) Veröffentlichungstag der Anmeldung: 07.11.1990
(73) Patentinhaber: Hoechst CeramTec Aktiengesellschaft, 95100 Selb (DE)
(72) Erfinder: Russner, Klaus, D-8560 Lauf a.d. Peg. (DE); Dietrich, Volker, Dr., D-8505 Röthenbach (DE); Meier, Gerd, D-8566 Leinburg 2 (DE)
(74) Vertreter: Isenbruck, Günter, Dr.

(56) Entgegenhaltungen:
- EP-A- 0 344 607
- US-A- 3 284 176

## Beschreibung

Die Erfindung betrifft ein Ringspurlager, bei dem Teile aus Keramik und Metall durch Löten miteinander verbunden sind.

Verbindungen von Keramik und Metall durch Löten sind bekannt. Hierzu wird die Keramik mit z.B. einer Molybdän-Mangan-Mischung oder Wolfram metallisiert und anschließend mit geeigneten Loten in einem weiteren Arbeitsgang mit einem oder mehreren Metallpartnern verbunden. Nach einem anderen Verfahren kann auf das Metallisieren der Keramik verzichtet werden. Es müssen jedoch Lote mit Anteilen von Titan, Zirkonium, Hafnium und ähnlichem verwendet werden. Zur Reduzierung der zwischen Metall und Keramik auftretenden Spannungen, die durch unterschiedliche Ausdehnungskoeffizienten hervorgerufen werden, können allerdings nur Metalle verwendet werden, die in ihrem Ausdehnungsverhalten der Keramik angepaßt sind. Es können auch spezielle Konstruktionen verwendet werden, die ebenfalls zu einem Spannungsabbau führen. Letztere sind jedoch nur gering mechanisch beanspruchbar, und somit für Ringspurlager nicht geeignet.

Der Erfindung liegt daher die Aufgabe zugrunde, ein Ringspurlager der eingangs genannten Art zu schaffen, bei dem das unterschiedliche Ausdehnungsverhalten zwischen Keramik und Metall auf einfache Weise, ohne zusätzliche Arbeitsgänge und ohne Beeinträchtigung der mechanischen Belastbarkeit, ausgeglichen werden kann.

Die Aufgabe wird dadurch gelöst, daß zwischen dem keramischen und dem metallischen Werkstoff ein mit diesen stoffschlüssig verbundenes Ausdehnungselement angeordnet ist.

Das Ausdehnungselement bzw. die Ausdehnungselemente können durch Löten mit den Werkstoffen verbunden sein. Sie können jedoch auch an den metallischen Werkstoff angeformt und mit dem keramischen Werkstoff durch Löten verbunden sein. Die Ausdehnungselemente können je nach Art der Verbindungsfläche zwischen Metall und Keramik als Stege ausgebildet sein, die die Form von Streifen, Ringen oder Balken aufweisen.

Die Erfindung wird im folgenden anhand von Zeichnungen beispielsweise naher erläutert. Es zeigt
- Figur 1: ein Ringspurlager geschnitten,
- Figur 2: eine alternative Ausführung des Ringspurlagers nach Figur 1 geschnitten und
- Figur 3: eine weitere Ausführungsform des Ringspurlagers.

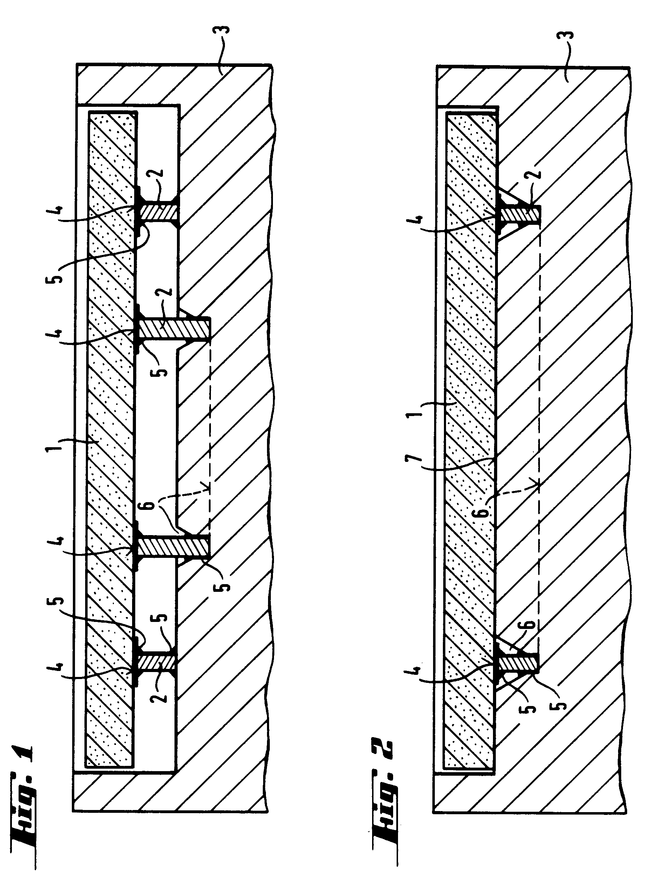

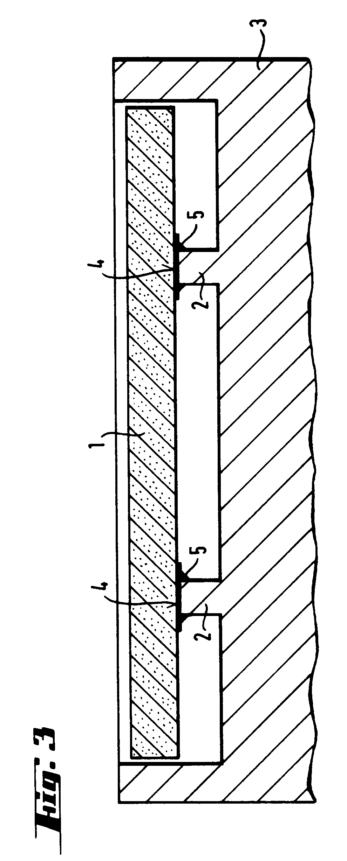

Keramischer Werkstoff (1) wird mit metallischem Werkstoff (3) durch Löten verbunden. Um die durch unterschiedliche thermische Ausdehnung von Keramik und Metall herrührenden Spannungen zu kompensieren, sind zwischen diesen Werkstoffen (1,3) Ausdehnungselemente (2) angeordnet, die mit der Keramik und dem Metall stoffschlüssig verbunden sind. Als stoffschlüssige Verbindung eignet sich Lot aus Silber-Kupfer-Eutektikum, Kupfer, Silber, Gold, oder Legierungen daraus. Bei passivem Löten muß die für das Lot (5) vorgesehene Fläche (4) der Keramik metallisiert sein, wofür sich Molybdän, Molybdän-Mangan oder Wolfram eignet. Um die Benetzung für das Lot zu verbessern, können die metallisierten Flächen (4) (elektro-)chemisch mit einer Nickelschicht versehen werden. Je nach Geometrie des Verbunds Keramik/Metall können die Ausdehnungselemente (2) aus Streifen, Ringen oder Balken bestehen. Bei einem Ringspurlager bieten sich Ringe als Ausdehungselemente (2) an. Zum besseren Zentrieren der Ringe kann das Metallteil (3) mit einer Nut (6) versehen sein. Bei der Ausführung des Ringspurlagers nach Figur 2 ist die Nut (6) so gewählt, daß das Ausdehnungselement (2) mit der Stirnfläche (7) des Metallteils (3) bündig abschließt. Damit werden die auf den Keramikteil (1) wirkenden Normalkräfte über die Stirnfläche (7) auf das Metallteil (3) übertragen, während das Ausdehungselement (2) die Tangentialkräfte aufnimmt.

Das Ausdehnungselement (2) kann auch einstückig an den metallischen Werkstoff angeformt sein (Fig. 3).

## Patentansprüche

1. Ringspurlager bei dem Teile aus Keramik und Metall durch Löten miteinander verbunden sind, wobei zwischen dem keramischen und dem metallischen Werkstoff ein mit diesen stoffschlüssig verbundenes Ausdehnungselement (2) angeordnet ist.

2. Ringspurlager nach Anspruch 1, dadurch gekennzeichnet, daß das Ausdehnungselement (2) durch Löten mit den Werkstoffen (1,3) verbunden ist.

3. Ringspurlager nach Anspruch 1, dadurch gekennzeichnet, daß das Ausdehnungselement (2) an den metallischen Werkstoff (3) einstückig angeformt und mit dem keramischen Werkstoff (1) durch Löten (4,5) verbunden ist.

## Claims

1. A collar step bearing in which parts made of ceramic and metal are joined to one another by soldering, wherein an expansion element (2) is arranged between the ceramic and metallic materials, said element being integrally joined to said materials.

2. A collar step bearing as claimed in claim 1, wherein the expansion element (2) is joined to the materials (1, 3) by soldering.

3. A collar step bearing as claimed in claim 1, wherein the expansion element (2) is molded in one piece on to the metallic material (3) and joined to the ceramic material (1) by soldering (4, 5).

## Revendications

1. Palier à piste annulaire, dans lequel des parties en céramique et en métal sont assemblées l'une à l'autre par soudage à la soudure tendre, dans lequel un élément de dilatation (2) interposé entre le matériau céramique et le matériau métallique est assemblé à ces matériaux par une liaison opérant par matière.

2. Palier à piste annulaire selon la revendication 1, caractérisé en ce que l'élément de dilatation (2) est assemblé aux matériaux (1, 3) par soudage à la soudure tendre.

3. Palier à piste annulaire selon la revendication 1, caractérisé en ce que l'élément de dilatation (2) est venu de matière en une seule pièce avec le matériau métallique (3) et est assemblé au matériau céramique (1) par soudage à la soudure tendre (4, 5).
